# EUROPEAN PATENT APPLICATION

(11) **EP 2 309 155 A1**
(43) Date of publication of application: **13.04.2011**
(21) Application number: 09172503.6
(22) Date of filing: 08.10.2009
(51) Int. Cl.: F16J 15/44, F16J 15/16, H02K 5/124, F16J 15/40

(54) **Sealing system of a sealed electric generator**

(71) Applicant: Alstom Technology Ltd, 5400 Baden (CH)
(72) Inventor: März, Mario, D-68165, Mannheim (DE); Langenbacher, Klaus, D-67366, Weingarten (DE)

(57) **Abstract**

The sealing system (20) of a sealed electric generator comprises a driven end and a non driven end seal ring (22) each having at least an oil outlet (24) connected in series to a discharge branch (26), a pump (28) and supply branch (30) connected to an inlet (32) of the same seal ring (22). Between the supply branch (30) and the discharge branch (26) of each seal ring (22) a bypass (34) with a control valve (36) is provided. Each discharge branch (26) has a reservoir (40) wherein oil is collected and having a sensor (42) arranged to measure the oil contained in it to drive the control valve (36) of the corresponding bypass (34) accordingly.

## Description

### TECHNICAL FIELD

The present invention relates to a sealing system of a sealed electric generator.

### BACKGROUND OF THE INVENTION

Sealed electric generators are known to comprise a casing containing a stator and a rotor that is connected via a shaft to a motor (typically a steam turbine or a gas turbine).

The casing is provided with (usually) two seal rings (one at each side end of the shaft/rotor) that seal the inner of the casing (normally containing H₂) against the outer atmosphere (air).

The seal rings are connected to supply circuits that constantly pump oil with a constant mass flow rate with a pressure higher than the casing inner pressure.

In the simplest embodiment, oil is fed to the seal rings through a central joint; in the seal ring the oil is diverted such that a portion goes towards the inner of the generator, where it is collected and discharged via an inner discharge branch of the supply circuit, and a further portion goes towards the outer of the generator, where it is collected and discharged via an outer branch of the supply circuit.

In particular, in the following reference to a sealing system with three track rings is made.

Three track rings have, in parallel with each other in one and the same ring, three tracks.

In an inner track (i.e. a track towards the inner of the generator) H₂ enriched oil circulates, in a central track oil (typically pure or vacuum or evacuated oil) circulates and in an outer track towards the outer of the generator air enriched oil circulates.

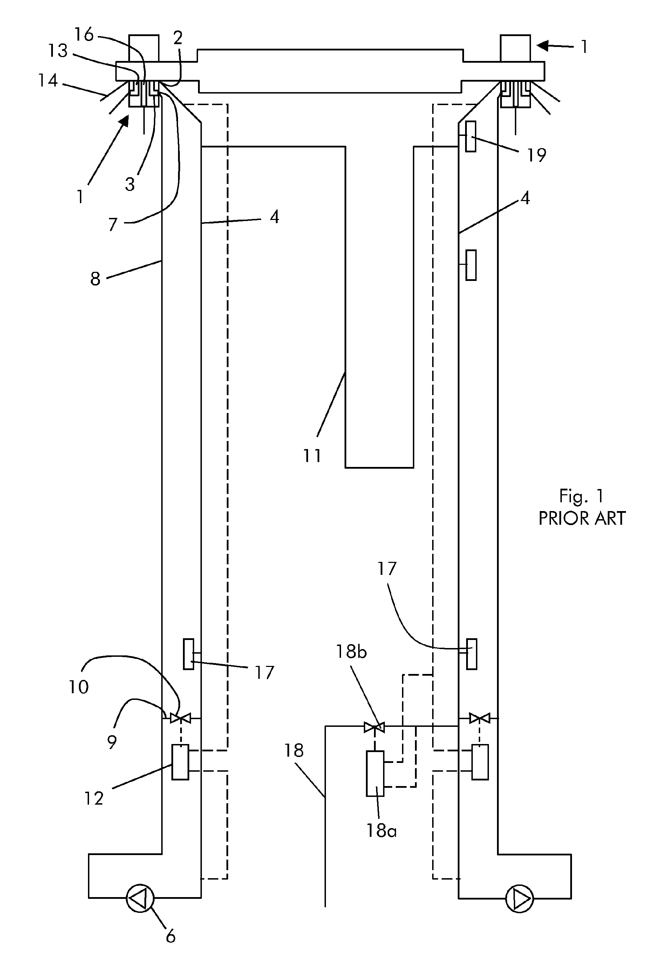

With reference to figure 1, in order to regulate the H₂ enriched oil fed to the seal rings 1, the outlet 2 of the inner track 3 of each ring 1 is connected to a discharge branch 4 that feeds a pump 6 that pumps the H₂ enriched oil into the inlet 7 of the inner track 3 of the same rings 1 via a supply branch 8.

In addition, first bypasses 9 with control valves 10 are provided between the discharge branch 4 and supply branch 8 of each ring 1 and a second bypass 11 is provided between the two discharge branches 4 of the two rings 1.

In order to control the H₂ enriched oil flow rate, this circuit is provided with mechanical sensors 12 (mechanical level controllers) that measure the differential pressure between a zone close to the outlet 2 (to measure the pressure inside of the generator) and a lowest zone of the discharge branch 4 (close to the pump 6) .

If the H₂ enriched oil level increases (or is higher than a prefixed value), the mechanical sensors 12 drive the control valves 10 to close, thereby the H₂ enriched oil pressure at the outlet 2 increases such that, in the ring 1, H₂ enriched oil floats over from the inner track 3 to the outer track 13 (where air enriched oil circulates) and thus floats over to the discharge branch 14 of the air enriched oil.

Consequently the H₂ enriched oil level in the discharge branch 4 decreases.

In contrast, when the H₂ enriched oil level in the discharge branch 4 decreases (or is below a prefixed level), the mechanical sensor 12 drives the control valve 10 to open, such that the H₂ enriched oil pressure at the outlet 2 decreases and vacuum oil floats from the central track 16 to the inner track 3 and thus into the discharge branch 4, to refill the H₂ enriched oil circuit.

The mechanical sensors 12 have a characteristical hysteresis of about 0.1 bar. Because of this hysteresis the H₂ enriched oil level can alternate about +/- 1 m without any mechanical sensor operation.

When the hysteresis is overrun and the mechanical sensor 12 starts to operate, there is a time delay until the regularisation is measurable in the discharge branch 4.

For these reasons, there must be a minimum H₂ enriched oil level in the discharge branch 4, to avoid empty-run of the pumps 6.

In this respect, level switches 17 are installed that switch off the pump 6 when the H₂ enriched oil level is too low.

These switches should not give alarm during normal operation and regularisation as well.

In addition, H₂ enriched oil level must not float into the generator.

For this reason a discharge branch 18 with a differential pressure controller 18a is installed. This controller 18a opens a discharge valve 18b in case of increasing oil level, to make the oil to float into a main vessel (not shown).

Additionally, a maximum level switch 19 is installed that gives an alarm if oil level is too high.

Also these switches should not give alarm during normal operation and regularisation as well.

The second bypass 11 causes further constrains.

In fact the second bypass 11 (being a siphon) defines a differential pressure between the driven end and the nondriven end of the generator.

This differential pressure, caused by the generator cooling fan, displaces the oil filling in the siphon. The oil filling must not be pressed out, in this case a forbidden circulation through the siphon would happen.

Only excessive oil amounts from the H₂-circuit driven end should run over to H₂-circuit non driven end, where it is discharged via branch 18.

To ensure this, in every operating condition the bypass or siphon 11 needs a height of 5 to 7 meters.

Therefore, because of all these constrains, the H₂ enriched oil discharge branch 4 must have a vertical length of 8 to 10 meters, such that the distance from bottom of seal oil system to generator axis is 12 to 15 meters.

Traditional power plants with a generator having a rotor connected to a single motor could accomplish these constrains.

Nevertheless, in new power plants having a generator with a rotor, often connected to two motors, typically a gas turbine at one rotor side and a steam turbine at the other rotor side, these elevation constrains are too limiting in order to optimise all aspects of the power plant.

In addition, also in applications with one single motor (such as a gas turbine or a steam turbine) elevation constrains are too stringent and should be overcome.

### SUMMARY OF THE INVENTION

The technical aim of the present invention is therefore to provide a sealing system of a sealed electric generator by which the said problems of the known art are eliminated.

Within the scope of this technical aim, an aspect of the invention is to provide a sealing system in which a supply circuit of the seal rings has a limited elevation.

Another aspect of the invention is to provide a sealing system in which the discharge branches of the H₂ enriched oil of the seal rings can have a limited elevation, in particular much lower than in traditional sealing systems.

The technical aim, together with these and further aspects, are attained according to the invention by providing a sealing system in accordance with the accompanying claims.

### BRIEF DESCRIPTION OF THE DRAWINGS

Further characteristics and advantages of the invention will be more apparent from the description of a preferred but non-exclusive embodiment of the sealing system according to the invention, illustrated by way of non-limiting examples in the accompanying drawings, in which:
Figure 1 is a schematic view of a sealing system according to the prior art;
Figure 2 is a schematic view of a sealing system in an embodiment of the invention; and
Figure 3 is a diagram showing an operating range of the sealing system in the embodiment of the invention.

### DETAILED DESCRIPTION OF THE INVENTION

With reference to the figures, these show a sealing system of a sealed electric generator; the sealing system is generally identified by reference 20.

The generator comprises a stator (not shown) and a rotor 21 rotatable within the stator; both rotor 21 and stator are housed within a sealed casing (also not shown) typically having a H₂ atmosphere.

In addition, the rotor 21 is also provided with supporting bearings (not shown) and seal rings 22; typically the seal rings 22 are two in number and are placed at both ends of the shaft/rotor.

The seal rings 22 are arranged to seal the casing containing the H₂ atmosphere against the outer air atmosphere.

In addition, the rotor 21 is also connected to one motor being a gas turbine or a steam turbine or also to two motors, one being a gas turbine and the other being a steam turbine; naturally also different configurations are possible and the particular rotor/motor connection does not influence the present invention.

Seal rings 22 are known to comprise one or more circumferential tracks wherein pressurized oil floats to keep the differential pressure between the two sides of the seal rings.

In the following particular reference to three track/three circuit seal rings is made, it is anyhow clear that the same concepts can be applied also to seal rings different from three track/three circuit seal rings, such as for example two track/ two circuit seal rings.

Three circuit seal rings have an inner track wherein H₂ enriched oil circulates, a central track wherein pure or vacuum or evacuated oil circulates, and an outer track wherein air enriched oil circulates.

The sealing system comprises two seal rings 22, one at the driven end and one at the non driven end of the generator.

Each seal ring 22 has an oil outlet 24 connected in series to a discharge branch 26, a pump 28 and a supply branch 30 connected to an inlet 32 of the same seal ring 22.

In addition, between the discharge branch 26 and the supply branch 30 of each seal ring 22 a bypass 34 with a control valve 36 is provided.

Each discharge branch 26 has a reservoir 40 wherein oil is collected; as shown in the figures the reservoirs 40 are connected to the discharge branches 26 of the inner track of the seal rings 22 (i.e. in the track where H₂ enriched oil circulates).

Each reservoir 40 has a sensor 42, preferably being a level sensor and preferably and electronic level sensor (such as for example a sensitive electronically operated level meters) arranged to measure the oil contained in the reservoir 40, to drive the control valve 36 of the corresponding bypass 34 accordingly.

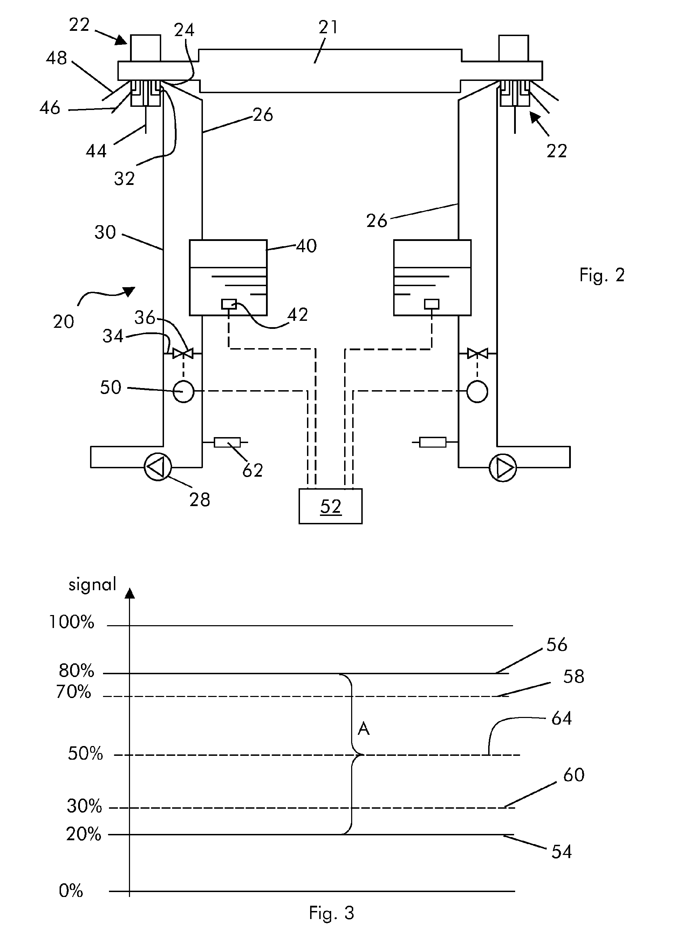

The other inlets and outlets of the seal rings 22 are connected to traditional circuits; for this reason in figure 2 only a portion 44 of a circuit that feeds oil to the central track of the seal rings 22, only a portion 46 of a supply branch that feeds air enriched oil to the outer track of the seal rings 22, and only a portion 48 of a discharge branch that collects air enriched oil from the outer track of the seal rings 22 are shown.

The sensors 42 measure the oil level within each reservoir 40 and the control valve 36 of each bypass 34 is an electrically driven valve for example via a motor 50.

As shown in the figures, each reservoir 40 is vertically placed between the generator (i.e. seal rings 22) and the bypass 34.

The sealing system 20 further comprises a control unit 52 (that could also be the main control system provided with a particular software) connected to each sensor 42 and the corresponding control valve 36 and/or motor 50, to drive the control valve 36 on the basis of the signals received from the corresponding sensor 42.

Advantageously, the control unit 52 defines an operating range (for example an H₂ enriched oil level range) wherein operation is allowed and, in other words, such that operation outside of the operating range is prevented.

The operation of the sealing system of the invention is apparent from that described and illustrated and is substantially the following.

Use of reservoirs 40 and sensors 42 lets the mechanical sensors be replaced and in addition the vertical discharge branch length be reduced.

In fact, when for any reasons the flow rate of H₂ enriched oil in the branches 26 and 30 changes, also its level within the reservoir 40 changes.

Thus the sensor 42 detects that the H₂ enriched oil level within the reservoir 40 has changed and sends a signal to the control unit 52 accordingly.

For example, the sensor 42 may periodically (such as every second) send a signal to the control unit 52 indicative of the H₂ enriched oil level within the reservoir 40; in this case, when the H₂ enriched oil level in the reservoir 40 changes also the signal sent from the sensor 42 to the control unit 52 changes accordingly (signal proportional to the H₂ enriched oil level).

The control unit 52 drives the motor 50 to open or close the bypass valve 36 accordingly.

In particular, with reference to figure 3, the control unit 52 defines a normal operation range A defined between a lower 54 and an upper 56 H₂ enriched oil level limits in the reservoirs 40; within the range A a reference oil level 64 is defined, this level is the oil reference level during normal operation.

When the H₂ enriched oil level in a reservoir 40 increases with respect to the reference oil level 64, the control unit 52 closes the corresponding control valve 36 proportionally, such that the oil which passes through the bypass 34 decreases and the H₂ enriched oil pressure at the corresponding seal ring 22 increases.

This causes H₂ enriched oil to float over to the outer track (wherein air enriched oil circulates) and thus to the corresponding discharge branch 48.

Consequently the H₂ enriched oil level in the reservoir 40 decreases.

The control unit 52 drives the control valve 36 to open to the normal operating configuration when the H₂ enriched oil level in the reservoir 40 reaches the reference oil level 64.

In contrast, when the H₂ enriched oil level in the reservoir 40 decreases with respect to the reference oil level 64, the control unit 52 drives the motor 50 to open the control valve 36 proportionally; this causes two effects.

First of all, branch 26 is directly fed from branch 30 via bypass 34.

Secondly H₂ enriched oil pressure at the seal ring 22 decreases, such that pure or vacuum oil floats from the central track into the outer H₂ enriched oil track and thus into the discharge branch 26.

These effects cause the reservoir 40 to be refilled.

Also in this case, control unit 52 drives the control valve 36 to close to the normal operating configuration when the H₂ enriched oil level in the reservoir 40 reaches the reference oil level 64.

If level 54 is under-run, pump 28 is turned off by control unit 52 (empty run protection) and cannot be switched on again until a security level 60 (higher than level 54) is reached and over-run.

Advantageously the sealing system is also provided with electrically driven overflow protection valves 62 (typically solenoid valves).

These valves 62 replace the second bypass or siphon 11 and the valve 18b and controller 18a of the prior art to discharge oil in case of malfunction (e. g. pump failure).

In fact, if level 56 is overrun, overflow protection valves 62 are opened by control unit 52 and are not reclosed until a security level 58 is underrun.

Control valve 36 and overflow protection valves 62 work independently from one another.

The upper and lower H₂ enriched oil levels limits 56 and 54, the security levels 58 and 60 and the reference oil level 64 are for example defined as a percentage of the maximum signal from the sensor 42 to the control unit 52; in this case a signal of 0% corresponds to empty reservoir 40, a signal of 100% corresponds to full reservoir 40, and the upper and lower H₂ enriched oil levels limits 56 and 54 and the security levels 58 and 60 are respectively defined by 80%, 20%, 70% and 30% of the maximum signal from the sensor 42 to the control unit 52; reference oil level 64 is defined by 50% of the maximum signal from the sensor 42 to the control unit 52.

The sealing system conceived in this manner is susceptible to numerous modifications and variants, all falling within the scope of the inventive concept; moreover all details can be replaced by technically equivalent elements.

In practice the materials used and the dimensions can be chosen at will according to requirements and to the state of the art.

### REFERENCE NUMBERS

### PRIOR ART

- 1: rings
- 2: outlet
- 3: inner track
- 4: discharge branch
- 6: pump
- 7: inlet
- 8: supply branch
- 9: first bypass
- 10: control valve
- 11: second bypass
- 12: mechanical sensor
- 13: outer track
- 14: discharge branch
- 16: central track
- 17: level switch
- 18: discharge branch
- 18a: differential pressure controller
- 18b: discharge valve
- 19: level switch

### EMBODIMENT OF THE INVENTION

- 20: sealing system
- 21: rotor
- 22: seal rings
- 24: H₂ enriched oil outlet
- 26: discharge branch
- 28: pump
- 30: supply branch
- 32: inlet
- 34: bypass
- 36: control valve
- 40: reservoir
- 42: sensor
- 44: pure oil circuit
- 46: air enriched oil supply branch
- 48: air enriched oil discharge branch
- 50: motor
- 52: control unit
- 54: lower H₂ enriched oil level limit
- 56: upper H₂ enriched oil level limit
- 58: security level
- 60: security level
- 62: overflow protection valves
- 64: reference oil level
- A: operating range

## Claims

1. Sealing system (20) of a sealed electric generator comprising two seal rings (22) each having at least an oil outlet (24) connected in series to a discharge branch (26), a pump (28) and supply branch (30) connected to an inlet (32) of the same seal ring (22), wherein between the supply branch (30) and the discharge branch (26) of each seal ring (22) a bypass (34) with a control valve (36) is provided, **characterised in that** each discharge branch (26) has a reservoir (40) wherein oil is collected, and **in that** each reservoir (40) has a sensor (42) arranged to measure the oil contained in it to drive the control valve (36) of the corresponding bypass (34) accordingly.

2. Sealing system (20) according to claim 1, **characterised in that** the seal rings (22) have at least two tracks, wherein said reservoirs (40) are connected to the discharge branches (26) of the inner track of the seal rings (22).

3. Sealing system (20) according to claim 2, **characterised in that** the seal rings (22) are three track seal rings, and **in that** each seal ring has an inner track towards the inner of the generator, a central track and an outer track towards the outer of the generator, wherein said reservoirs (40) are connected to the discharge branches (26) of the inner track of the seal rings (22).

4. Sealing system (20) according to claim 3, **characterised in that** in the inner track H₂ enriched oil circulates, in the central track oil circulates and in the outer track an air enriched oil circulates.

5. Sealing system (20) as claimed in claim 1, **characterised in that** the sensors (42) measure the oil level within each reservoir (40).

6. Sealing system (20) as claimed in claim 1, **characterised in that** the control valve (36) of each bypass (34) is an electrically driven valve.

7. Sealing system (20) as claimed in claim 1, **characterised in that** each reservoir (40) is vertically placed between the generator and the bypass (34).

8. Sealing system (20) as claimed in claim 1, **characterised by** comprising a control unit (52) connected to each sensor (42) and the corresponding control valve (36), said control unit (52) driving the control valve (36) on the basis of the signals received from the corresponding sensor (42).

9. Sealing system (20) as claimed in claim 8, **characterised in that** the control unit (52) is defined by a software integrated in a main control system.

10. Sealing system (20) as claimed in claim 8, **characterised in that** the control unit (52) defines an operating range such that operation outside of the operating range is prevented.

11. Sealing system (20) as claimed in claim 1, **characterised by** comprising overflow protection valves (62) driven by said control unit (52).

12. Sealing system (20) as claimed in claim 1, **characterised in that** the seal rings (20) are placed one at each end of the rotor.
